(19) Europäisches Patentamt
European Patent Office
Office européen des brevets

(11) **EP 3 640 352 A1**

(12) **EUROPEAN PATENT APPLICATION**

(43) Date of publication:
**22.04.2020 Bulletin 2020/17**

(51) Int Cl.:
*C21D 6/00* (2006.01)          *B22F 3/00* (2006.01)
*B21B 21/00* (2006.01)        *B21C 3/00* (2006.01)
*C21D 7/02* (2006.01)          *C21D 8/10* (2006.01)
*C21D 9/08* (2006.01)          *C21D 1/30* (2006.01)
*C21D 1/32* (2006.01)          *C22C 33/02* (2006.01)
*C22C 38/00* (2006.01)        *C22C 38/02* (2006.01)
*C22C 38/04* (2006.01)        *C22C 38/44* (2006.01)
*F16L 9/02* (2006.01)

(21) Application number: **18200853.2**

(22) Date of filing: **17.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **AB Sandvik Materials Technology
811 81 Sandviken (SE)**

(72) Inventors:
• **SVEDBERG, Daniel
  SE-80628 Gävle (SE)**
• **ARTBERGER, OLSSON, Per
  233 34 Svedala (SE)**

(74) Representative: **Sandvik
Sandvik Intellectual Property AB
811 81 Sandviken (SE)**

(54) **METHOD OF PRODUCING TUBE OF DUPLEX STAINLESS STEEL**

(57) Herein a method (10) of producing a tube of duplex stainless steel is disclosed. The steel comprises the following composition, in weight %: C max 0.03, Si max 1.0, Mn max 1.5, P max 0.05, S max 0.03, Cr 24 - 26, Ni 6 - 8, Mo 3.0 - 4.0, N 0.24 - 0.32. The method (10) comprises steps of:
- forming (12) a tube (2) of the duplex stainless steel,

- cold working (14) the tube (2) obtained from the step of forming (12) a tube (2), and
- soft annealing (16) the tube (2) after the step of cold working (14) by subjecting the tube (2) to a temperature, T, within a range of 500 - 750° C for a time period, t, of 0.5 - 5 minutes.

Fig. 2

## Description

TECHNICAL FIELD

The present disclosure relates to a method of producing a tube of duplex stainless steel.

BACKGROUND

During the production of a tube of duplex stainless steel, the tube is subjected to cold working to reach the desired geometry and tolerances. The cold working may also be used to deformation harden the tube to a specified minimum yield strength. Since duplex steel deformation hardens rapidly along with area reduction during cold working, it is difficult to achieve both a specified geometry and the specified minimum yield strength in one cold working operation. Thus, in order to provide a duplex stainless steel tube with specific geometry and minimum yield strength the duplex stainless steel tube is cold worked and thereafter annealed at approximately 1100° C causing a full recrystallisation of the duplex stainless steel. Thereafter, the duplex stainless steel tube is subjected to a second cold working step with a limited area reduction. The limited area reduction is chosen such that the specific minimum yield strength is achieved.

EP 2853614 discloses a duplex stainless steel pipe and a manufacturing method thereof. Cold working of the duplex material introduces anisotropy in the pipe. A low temperature heat treatment is performed at a heat treatment temperature of 350°C to 450°C. Thus, the anisotropy of the yield strength in the pipe axis direction and in the pipe circumferential direction of the stainless steel pipe is decreased after the cold working.

WO 2017/114847 discloses a process of producing a duplex stainless steel tube. The process is based around formulas taking into account the constituents of the duplex stainless steel as well as parameters of the area reduction during cold working in order to provide a target yield strength.

SUMMARY

It is an object of the present disclosure to provide an efficient method of producing a tube of stainless steel.

According to an aspect of the present disclosure, there is provided a method of producing a tube of duplex stainless steel comprising the following composition, in weight %:

C max 0.03,
Si max 1.0,
Mn max 1.5,
P max 0.05,
S max 0.03,
Cr 24 - 26,
Ni 6-8,

Mo 3.0 - 4.0,
N 0.24 - 0.32, and
a balance of Fe and unavoidable impurities, wherein

the method comprises steps of:

- forming a tube of the duplex stainless steel,
- cold working the tube obtained from the step of forming a tube, and
- soft annealing the tube after the step of cold working by subjecting the tube to a temperature, T, within a range of 500 - 750° C for a time period, t, of 0.5 - 5 minutes.

Since the tube of stainless steel which has been cold worked, is soft annealed by subjecting the tube to a temperature within a range of 500 - 750° C for a time period of 0.5 - 5 minutes, recrystallisation of the cold worked tube is substantially avoided. The yield strength of a duplex stainless steel tube produced in accordance with this method is improved over that of the duplex stainless steel material before the step of cold working while ductility remains at an adequate level, without becoming too brittle. As a result, the above mentioned object is achieved.

Moreover, a particular minimum yield strength may be targeted without having to anneal the duplex stainless steel tube to full recrystallisation and without having to subject the duplex stainless steel tube to a second cold working step. Thus, the present disclosure is based around one single step of cold working providing a high area reduction followed by soft annealing.

When subjected to temperatures within a range of 450 - 1000° C, duplex stainless steel materials are prone to embrittlement and reduced corrosion resistance. Therefore, commonly this temperature range has been avoided during the manufacturing and use of duplex stainless steel tubes.

The inventors have realised that subjecting a duplex stainless steel tube to the temperature range of 500 - 750° C for a short controlled time period of 0.5 - 5 minutes will improve the ductility of the duplex stainless steel tube without causing embrittlement or reduced corrosion resistance. Moreover, the inventors have discovered that a target minimum yield strength may be achieved in a controlled manner.

The target minimum yield strength may be achieved by the step of soft annealing at the above mentioned temperature range and within the above mentioned time period. In contrast to one of the above described prior art methods, this is achieved without requiring annealing at a high temperature causing full recrystallisation followed by a second cold working step. In the present disclosure the step of soft annealing results in a partial reduction of the yield strength achieved in the step of cold working, to arrive at a target minimum yield strength, see further below.

The above specified duplex stainless steel material also goes under the name, Sandvik SAF2507®. One common use of such duplex stainless steel tubes is within the oil and gas industry.

The step of forming the tube of the duplex stainless steel results in a tube ready for the cold working step. The step of forming the tube may comprise the producing of an ingot or a billet from a melt. The ingot or billet is then hot extruded into a tube. Alternatively, the step of forming the tube may comprise the production of a duplex stainless steel powder, which is formed and hot isostatic pressed into a tube shape.

The step of cold working the tube may be performed in a known manner such as by cold rolling, cold pilgering, cold drawing, or combinations thereof. The step of cold working may be the only cold working step in the method of producing a tube of duplex stainless steel. As such, the step of cold working may comprise cold working to a final dimension of the tube, or to substantially the final dimension of the tube. Only a minor diameter adjustment may take place subsequent to the step of cold working, as a result of e.g. peel turning, grinding, and/or polishing.

According to embodiments, in the step of soft annealing the tube, a target minimum yield strength, Rp0.2, of the duplex stainless steel may be achieved following the formula Rp0.2 = 1642 - 0.96 x T - 10.75 x t with a standard deviation in the target minimum yield strength, Rp0.2, of 10 MPa, wherein T is temperature in degrees Celsius, t is time in minutes. In this manner, a particular minimum yield strength may be achieved in the step of soft annealing. The unit of Rp0.2 is MPa.

More specifically, by selecting an appropriate temperature and an appropriate time period within the above discussed temperature and time period ranges, a target minimum yield strength Rp0.2 within a range of 868.25 - 1156.25 MPa may be achieved with a standard deviation of 10 MPa for a duplex stainless steel tube of the above defined material, Sandvik SAF2507®. Thus, a particular minimum yield strength may be easily targeted without having to anneal the duplex stainless steel tube to full recrystallisation and without having to subject the duplex stainless steel tube to a second cold working step.

According to embodiments, the step of soft annealing the tube may be followed by a step of:

- quenching the tube. In this manner, it may be ensured that the step of soft annealing is interrupted at a particular point in time.

Further features of, and advantages will become apparent when studying the appended claims and the following detailed description.

BRIEF DESCRIPTION OF THE DRAWINGS

Various aspects and/or embodiments, including particular features and advantages, will be readily understood from the example embodiments discussed in the following detailed description and the accompanying drawings, in which:

Fig. 1 illustrates a tube of duplex stainless steel,
Fig. 2 illustrates a method of producing a tube of duplex stainless steel.
Fig. 3 illustrates a diagram over the yield strength of test specimens of a tube of duplex stainless steel produced in accordance with the method.

DETAILED DESCRIPTION

Aspects and/or embodiments will now be described more fully. Like numbers refer to like elements throughout. Well-known functions or constructions will not necessarily be described in detail for brevity and/or clarity.

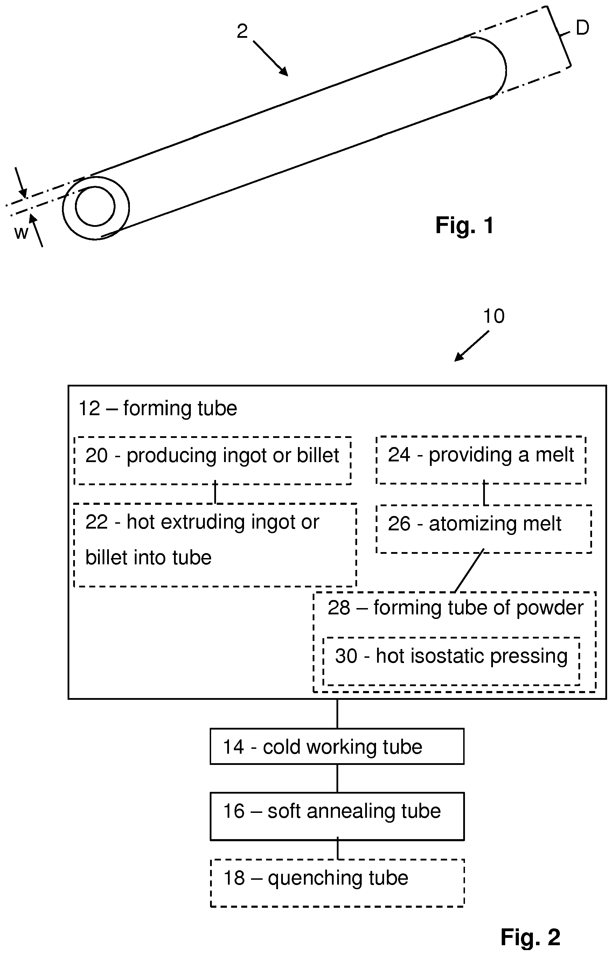

**Fig. 1** illustrates a duplex stainless steel tube 2 according to embodiments. The duplex stainless steel tube 2 has an outer diameter D, and a wall thickness w. The duplex stainless steel tube 2 has been produced by a method of producing a tube of duplex stainless steel according to aspects and/or embodiments discussed herein.

Mentioned purely as an example, the outer diameter D of the tube 2 may be within a range of 50 - 250 mm. A wall thickness w of the tube 2 may be within a range of 5 - 35 mm.

**Fig. 2** illustrates a method 10 of producing a tube of duplex stainless steel. The tube may be a tube 2 as discussed in connection with **Fig. 1.**

The duplex stainless steel comprises the following composition, in weight %:

C max 0.03,
Si max 1.0,
Mn max 1.5,
P max 0.05,
S max 0.03,
Cr 24 - 26,
Ni 6-8,
Mo 3.0 - 4.0,
N 0.24 - 0.32, and
a balance of Fe and unavoidable impurities.

As to the composition of the duplex stainless steel, the following is to be noted regarding the individual alloying elements therein:

Carbon, C is a representative element for stabilizing austenitic phase and an important element for maintaining mechanical strength. However, if a large content of carbon is used, carbon will precipitate as carbides and thus reduces corrosion resistance. According to one embodiment, the carbon content of the duplex stainless steel used in the method disclosed hereinbefore and hereinafter is 0 to 0.03 wt% such as 0 to 0.02 wt%.

Chromium, Cr, has strong impact on the corrosion resistance of the duplex stainless steel as defined hereinabove or hereinafter, especially pitting corrosion. Cr improves the yield strength, and counteracts transformation of austenitic structure to martensitic structure upon deformation of the duplex stainless steel. However, an increasing content of Cr will result in for the formation of unwanted stable chromium nitride and sigma phase and a more rapid generation of sigma phase. According to one embodiment, the chromium content of the duplex stainless steel used in the method disclosed hereinbefore and hereinafter is of from 24 to 26 wt%.

Manganese, Mn, has a deformation hardening effect on the duplex stainless steel as defined hereinabove or hereinafter. Mn is also known to form manganese sulphide together with sulphur present in the steel, thereby improving the hot workability. However, at too high levels, Mn tends to adversely affect both corrosion resistance and hot workability. According to one embodiment, the manganese content of the duplex stainless steel used in the method disclosed hereinbefore and hereinafter is 0 to 1.5 wt% such as 0 to 1.2 wt%.

Molybdenum, Mo, has a strong influence on the corrosion resistance of the duplex stainless steel as defined hereinabove or hereinafter and it heavily influences the pitting resistance equivalent, PRE. Mo has also a positive effect on the yield strength and increases the temperature at which the unwanted sigma-phases are stable and further promotes generation rate thereof. Additionally, Mo has a ferrite-stabilizing effect. According to one embodiment, the molybdenum content of the duplex stainless steel used in the method disclosed hereinbefore and hereinafter is of from 3.0 to 4.5 wt% such as 3.5 to 4.0 wt%.

Nickel, Ni, has a positive effect on the resistance against general corrosion. Ni also has a strong austenite-stabilizing effect. According to one embodiment, the nickel content of the duplex stainless steel used in the method disclosed hereinbefore and hereinafter is of from 6 to 8 wt%, such as 6.5 to 7.5 wt%.

Nitrogen, N, has a positive effect on the corrosion resistance of the duplex stainless steel as defined hereinabove or hereinafter and also contributes to deformation hardening. It has a strong effect on the pitting corrosion resistance equivalent PRE (PRE=Cr+3.3Mo+16N) and has also a strong austenite stabilizing effect and counteracts transformation from austenitic structure to martensitic structure upon plastic deformation of the duplex stainless steel. However, at too high levels, N tends to promote chromium nitrides, which should be avoided due to their negative effect on ductility and corrosion resistance. According to one embodiment, the nitrogen content of the duplex stainless steel used in the method disclosed hereinabove or hereinafter is 0.24 to 0.32 wt% such as 0.26 to 0.30 wt%.

Silicon, Si, is often present in the duplex stainless steel since it may have been added for deoxidization earlier in the production thereof. Too high levels of Si may result in the precipitation of intermetallic compounds in connection to later heat treatments or welding of the duplex stainless steel. Such precipitations will have a negative effect on both the corrosion resistance and the workability. According to one embodiment, the silicon content of the duplex stainless steel used in the method disclosed hereinabove or hereinafter is of 0 to 1.0 wt% such as 0 to 0.8 wt%.

Phosphorous, P, may be present as an impurity in the stainless steel used in the method disclosed hereinabove or hereinafter, and will result in deteriorated workability of the steel if at too high level, thus, P<0.05 wt% such as P<0.03 wt%.

Sulphur, S, may be present as an impurity in the stainless steel used in the method disclosed hereinabove or hereinafter and will result in deteriorated workability of the steel if at too high level, thus, S<0.03 wt% such as S<0.02 wt%.

Oxygen, O, may be present as an impurity in the stainless steel used in the method disclosed hereinabove or hereinafter, wherein O<0.010 wt%.

Optionally small amounts of other alloying elements may be added to the duplex stainless steel as defined hereinabove or hereinafter in order to improve e.g. the machinability or the hot working properties, such as the hot ductility. Example, but not limiting, of such elements are REM, Ca, Co, Cu, Ti, Nb, W, Sn, Ta, Mg, B, Pb and Ce. The amounts of one or more of these elements are of max 0.5 wt%. According to one embodiment, the duplex stainless steel as defined hereinabove or hereinafter may also comprise small amounts other alloying elements which may have been added during the method, e.g. Ca (<0.01 wt%), Mg (<0.01 wt%), Cu (max 0.5 wt%), and rare earth metals REM (<0.2 wt%).

When the term "max" is used, the skilled person knows that the lower limit of the range is 0 weight % unless another number is specifically stated. Examples of impurities are elements and compounds which have not been added on purpose, but cannot be fully avoided as they normally occur as impurities in e.g. the raw material or the additional alloying elements used for manufacturing of the duplex stainless steel.

The method 10 comprises steps of:

- Forming 12 a tube of the duplex stainless steel.
- Cold working 14 the tube obtained from the step of forming 12 a tube.
- Soft annealing 16 the tube after the step of cold working 14 by subjecting the tube to a temperature, T, within a range of 500 - 750° C for a time period, t, of 0.5 - 5 minutes.

According to some embodiments, the step of forming 12 a tube may comprise steps of:

- producing 20 an ingot or a continuous casted billet of the duplex stainless steel, and
- hot extruding 22 the ingot or the billet obtained from the step of producing 20 an ingot or a continuous casted billet into a tube.

In this manner, a tube of the duplex stainless steel may be provided for the subsequent step of cold working 14 the tube.

The method 10 may include further known intermediate and subsequent production steps such as cutting, peel turning, deep boring, straightening, and acid pickling.

According to alternative embodiments, the step of forming 12 a tube may comprise steps of:

- providing 24 a melt of the duplex stainless steel,
- atomizing 26 the melt of the duplex stainless steel to produce a powder of the duplex stainless steel,
- forming 28 the tube of the powder of the duplex stainless steel, wherein the step of forming 28 the tube of the powder comprises a step of:
- hot isostatic pressing 30 the powder of duplex stainless steel.

In this manner, a tube based on a powder duplex stainless steel material may be produced and provided for the subsequent step of cold working 14 the tube.

The method 10 may include further known intermediate and subsequent production steps such as cutting, peel turning, straightening, and acid pickling.

The step of soft annealing 16 the tube may be performed e.g. in a furnace under controlled temperature conditions. A further alternative may be to induction heat the tube to a specified temperature.

The step of soft annealing 16 the tube may be performed in accordance with a particular formula in order to achieve a particular target minimum yield strength, Rp0.2, in the tube of the duplex stainless steel. The formula reads:

$$Rp0.2 = 1642 - 0.96 \times T - 10.75 \times t$$

In the formula T represents the temperature in degrees Celsius, t represents the time period in minutes, which results in that the targeted minimum yield strength, Rp0.2, has the unit MPa. A standard deviation of 10 MPa is achieved in the target minimum yield strength, Rp0.2. As mentioned above, for the material Sandvik SAF2507® a target minimum yield strength Rp0.2 within a range of 868.25 - 1156.25 MPa may be achieved with a standard deviation of 10 MPa when the step of soft annealing 16 the tube is performed in accordance with the formula.

Suitably, the step of soft annealing 16 the tube may be followed by a step of:

- quenching 18 the tube. Thus, the step of soft annealing may be ended, and it may be ensured that embrittlement and reduced corrosion resistance is avoided. The quenching 18 may be performed by quenching in water.

According to some embodiments, the step of soft annealing 16 the tube may comprise subjecting the tube to a temperature within a range of 600 - 750° C for a time period of 1 - 3 minutes.

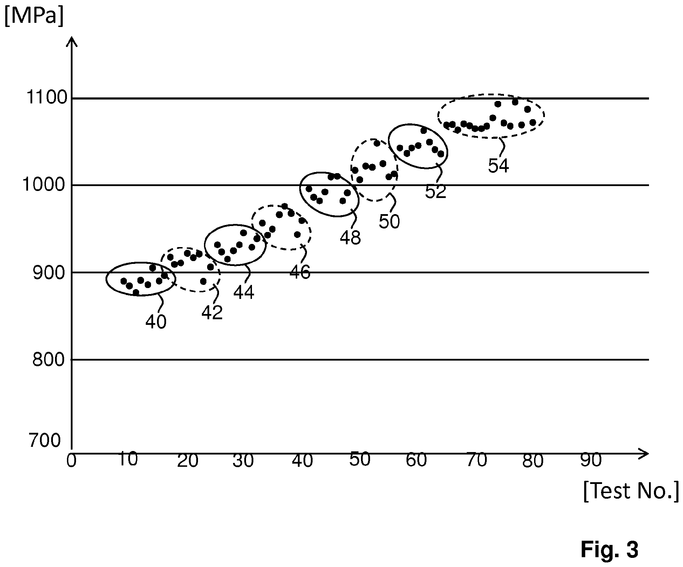

Below, with reference to **Fig. 3** examples related to these embodiments are discussed.

According to embodiments, the step of cold working 14 the tube, includes an area reduction of the tube within a range of 25 - 70%. In this manner, the duplex stainless steel may be strain hardened in the step of cold working 14 the tube.

This is a range of area reduction comparable to that of the first cold working step performed in the prior art method discussed under the heading Background above, but considerably larger than the second cold working step of the prior art method.

The area reduction relates to a reduction of the cross sectional area of the tube. The difference in cross sectional area before and after the step of cold working is divided by the cross sectional area before the step of cold working. Only the area of the tube where there is material is taken account of in the calculation of the area reduction, i.e. the cross sectional area of the inside of the tube is excluded.

With reference to **Fig. 3** a number of examples related to duplex stainless steel tubes produced in accordance with the present method will now be discussed. In particular soft annealing in accordance with various embodiments of the step of soft annealing 16 of the method of 10 will be presented.

A duplex stainless steel tube of the above defined material, Sandvik SAF2507®, having an outer diameter, D of 173.8 mm and a wall thickness of 29.7 mm has been produced by the steps of forming 12 the tube, including producing an ingot or casted billet, and cold working 14 the tube. The step of cold working 14 was performed by cold pilgering with an area reduction of 30.7%.

The step of soft annealing 16 was performed by subjecting different lengthwise sections of the tube to different temperatures over varying time periods, followed by water quenching.

More specifically, the different sections of the tube were subjected to induction heating using effect ranges 40-100 kW at a frequency of 30 kHz for different time periods utilizing different feeding rates through the induction heating apparatus.

The different sections of the tube were cut up into pieces, of which test specimens for tensile testing were manufactured. In **Fig. 3** the yield strength in MPa of the differently numbered test specimens is shown.

The test specimens which have been subjected to the same soft annealing temperature and time have a yield strength within a limited yield range, as clearly visible in the diagram of **Fig. 3**. The eighth test samples within each circle have been subjected to the same temperature and time period.

Thus, the conclusion can be drawn that a consistent reduction in yield strength is achievable for each particular soft annealing temperature and particular soft annealing time period. Moreover, the above discussed formula for the reduction of the minimum yield strength of a tube of the duplex stainless steel Sandvik SAF2507®is verified by the yield strengths of the test specimens.

More specifically, the different encircled test specimens in **Fig. 3** have been subjected to the following soft annealing temperatures and soft annealing time periods:

    40 - 750°C for 3 minutes
    42 - 750°C for 1 minutes
    44 - 700°C for 3 minutes
    46 - 700°C for 1 minutes
    48 - 650°C for 3 minutes
    50 - 650°C for 1 minutes
    52 - 600°C for 1 minutes
    54 - Test samples which have not been soft annealed after cold working.

The microstructure of the soft annealed tube had not recrystallised and was similar to, or almost similar to, that of the cold worked tube. Concerning the hardness of the soft annealed tube, it could be concluded that the hardness is on same level as low reduction cold worked Sandvik SAF2507® material, i.e. a hardness comparable to that of a tube made of Sandvik SAF2507®, which has been produced according to a prior art method including a second step of cold working with an area reduction of less than 25%.

It is to be understood that the foregoing is illustrative of various example embodiments and that the scope of protection is defined only by the appended claims. A person skilled in the art will realize that the example embodiments may be modified, and that different features of the example embodiments may be combined to create embodiments other than those described herein, without departing from the scope of protection, as defined by the appended claims.

**Claims**

1. A method (10) of producing a tube (2) of duplex stainless steel comprising the following composition, in weight %:

    C max 0.03,
    Si max 1.0,
    Mn max 1.5,
    P max 0.05,
    S max 0.03,
    Cr 24 - 26,
    Ni 6-8,

    Mo 3.0 - 4.0,
    N 0.24 - 0.32, and
    a balance of Fe and unavoidable impurities, wherein
    the method (10) comprises steps of:

        - forming (12) a tube (2) of the duplex stainless steel,
        - cold working (14) the tube (2) obtained from the step of forming (12) a tube (2), and
        - soft annealing (16) the tube (2) after the step of cold working (14) by subjecting the tube (2) to a temperature, T, within a range of 500 - 750° C for a time period, t, of 0.5 - 5 minutes.

2. The method (10) according to claim 1, wherein in the step of soft annealing (16) the tube (2), a target minimum yield strength, Rp0.2, of the duplex stainless steel is achieved following the formula Rp0.2 = 1642 - 0.96 x T - 10.75 x t with a standard deviation in the target minimum yield strength Rp0.2 of 10 MPa, wherein T is temperature in degree Celsius, t is time in minutes.

3. The method (10) according to claim 1 or 2, wherein the step of soft annealing (16) the tube (2) comprises subjecting the tube (2) to a temperature within a range of 600 - 750° C for a time period of 1 - 3 minutes.

4. The method (10) according to any one of the preceding claims, wherein the step of soft annealing (16) the tube (2) is followed by a step of:

    - quenching (18) the tube (2).

5. The method (10) according to any one of the preceding claims, wherein the step of cold working (14) the tube (2), includes an area reduction of the tube (2) within a range of 25 - 70%.

6. The method (10) according to any one of the preceding claims, wherein the step of forming (12) a tube (2) comprises steps of:

    - producing (20) an ingot or a continuous casted billet of the duplex stainless steel,
    - hot extruding (22) the ingot or the billet obtained from the step of producing (20) an ingot or a continuous casted billet into a tube (2).

7. The method according to any one of claims 1 - 5, wherein the step of forming (12) a tube (2) comprises steps of:

    - providing (24) a melt of the duplex stainless steel,

- atomizing (26) the melt of the duplex stainless steel to produce a powder of the duplex stainless steel,
- forming (28) the tube (2) of the powder of the duplex stainless steel, wherein the step of forming the tube (2) comprises a step of:
- hot isostatic pressing (30) the powder of duplex stainless steel.

**Fig. 1**

12 – forming tube

20 - producing ingot or billet

24 - providing a melt

22 - hot extruding ingot or billet into tube

26 - atomizing melt

28 – forming tube of powder

30 - hot isostatic pressing

14 - cold working tube

16 – soft annealing tube

18 – quenching tube

**Fig. 2**

Fig. 3

Europäisches
Patentamt

European
Patent Office

Office européen
des brevets

# EUROPEAN SEARCH REPORT

Application Number

EP 18 20 0853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 361 564 B (JIANGSU YINHUAN PREC STEEL PIPE CO LTD) 15 July 2015 (2015-07-15) | 1,3-6 | INV. C21D6/00 B22F3/00 |
| Y | * para. 0032-0063 * | 7 | B21B21/00 B21C3/00 |
| X | CN 107 641 773 A (ZHEJIANG LONGDA STAINLESS STEEL CO LTD) 30 January 2018 (2018-01-30) | 1,4,6 | C21D7/02 C21D8/10 C21D9/08 |
| Y | * para. 0048-0053 * | 7 | C21D1/30 C21D1/32 |
| Y | WO 2017/013180 A1 (SANDVIK INTELLECTUAL PROPERTY HB) 26 January 2017 (2017-01-26) * page 12, lines 10-15; claims 1-8 * | 7 | C22C33/02 C22C38/00 C22C38/02 C22C38/04 C22C38/44 |
| A | WO 2015/200325 A1 (ATI PROPERTIES INC) 30 December 2015 (2015-12-30) * claims 24-26, 41; table 3 * | 1-6 | F16L9/02 |

TECHNICAL FIELDS
SEARCHED      (IPC)

C21D
C22C
B21B
B21L
B22F
B21C
F16L

The present search report has been drawn up for all claims

| Place of search | Date of completion of the search | Examiner |
|---|---|---|
| The Hague | 19 February 2019 | Kreutzer, Ingo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## EP 3 640 352 A1

### ANNEX TO THE EUROPEAN SEARCH REPORT
### ON EUROPEAN PATENT APPLICATION NO.

EP 18 20 0853

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2019

| Patent document cited in search report | | Publication date | Patent family member(s) | | Publication date |
|---|---|---|---|---|---|
| CN 103361564 | B | 15-07-2015 | NONE | | |
| CN 107641773 | A | 30-01-2018 | NONE | | |
| WO 2017013180 | A1 | 26-01-2017 | CA | 2991658 A1 | 26-01-2017 |
| | | | CN | 107849630 A | 27-03-2018 |
| | | | EP | 3325675 A1 | 30-05-2018 |
| | | | JP | 2018529837 A | 11-10-2018 |
| | | | KR | 20180031009 A | 27-03-2018 |
| | | | US | 2018209022 A1 | 26-07-2018 |
| | | | WO | 2017013180 A1 | 26-01-2017 |
| WO 2015200325 | A1 | 30-12-2015 | AR | 101013 A1 | 16-11-2016 |
| | | | AU | 2015280111 A1 | 09-02-2017 |
| | | | CA | 2953819 A1 | 30-12-2015 |
| | | | CN | 106536078 A | 22-03-2017 |
| | | | EA | 201790096 A1 | 30-06-2017 |
| | | | EP | 3160665 A1 | 03-05-2017 |
| | | | JP | 2017532201 A | 02-11-2017 |
| | | | KR | 20170027785 A | 10-03-2017 |
| | | | SG | 11201610814R A | 27-01-2017 |
| | | | US | 2016033059 A1 | 04-02-2016 |
| | | | WO | 2015200325 A1 | 30-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2853614 A

- WO 2017114847 A